(19) Europäisches Patentamt
European Patent Office
Office européen des brevets

(11) **EP 2 133 741 B1**

(12) # EUROPEAN PATENT SPECIFICATION

(45) Date of publication and mention
of the grant of the patent:
**21.12.2016 Bulletin 2016/51**

(51) Int Cl.:
***G03B 15/03*** (2006.01)

(21) Application number: **09162520.2**

(22) Date of filing: **11.06.2009**

(54) **Flash device, imaging apparatus, camera system, and control method for flash device**

Blitzvorrichtung, Bildaufnahmevorrichtung, Kamerasystem und Steuerungsverfahren für Blitzvorrichtung

Dispositif flash, appareil d'imagerie, système de caméra, et procédé de contrôle de dispositif flash

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.06.2008 JP 2008155254**

(43) Date of publication of application:
**16.12.2009 Bulletin 2009/51**

(73) Proprietor: **Canon Kabushiki Kaisha**
**Tokyo 146-8501 (JP)**

(72) Inventor: **Odaka, Yukio**
**Ohta-ku Tokyo (JP)**

(74) Representative: **Williamson, Brian**
**Canon Europe Ltd**
**3 The Square**
**Stockley Park**
**Uxbridge**
**Middlesex**
**UB11 1ET (GB)**

(56) References cited:
**EP-A- 1 538 480      JP-A- 2005 115 060**
**US-A1- 2005 265 014**

**Description**

BACKGROUND OF THE INVENTION

Field of the Invention

The present invention relates to a flash device with a light emission unit configured to continuously emit light, an imaging apparatus to which the flash device can be mounted, and a control method for the flash device.

Description of the Related Art

In a flash device with a flash tube as a light source, the guide number is determined by the energy of a main capacitor. Thus, a reach distance of flash light can easily be calculated and displayed based on film sensitivity or the sensitivity (gain) of an image sensor and an aperture value of a lens, which define the photographing conditions of a camera. As a photographer can be informed of a reach distance of flash light before photographing an image, the photographer can prevent underexposure when photographing the image.

Japanese Utility Model Application Laid-Open No. 06-021030 discusses a technique to display a guide number required for a flash device according to an object distance, film sensitivity, and an aperture value in a camera for flash photography.

In recent years, flash devices that use a white light-emitting diode (white LED) or the like, instead of a flash tube, as a light source, have become known. In order to prevent underexposure during photographing of an image, such a flash device needs to determine a reach distance of flash light from the flash device before photographing of the image and to display the reach distance for the photographer's information. US2005265014 discloses an illuminating device having a plurality of light emitting elements which can emit light continuously with constant brightness. In this illuminating device, the overall light emission brightness achieved with the illuminating device is controlled through exposure calculation so as to achieve optimal exposure.

While a flash device that uses a flash tube as a light source is configured to instantaneously emit light by discharging a capacitor, a flash device that uses, for example, a white LED instead of a flash tube as a light source is configured to continuously emit light at a fixed light emission amount as long as a constant electric current is supplied to the white LED. Thus, the guide number varies depending on shutter speed during flash photographing, so that a reach distance of the flash light also varies. Accordingly, in order to calculate and display the reach distance, it is also required to take photographing information other than sensitivity (gain) and an aperture value into consideration.

SUMMARY OF THE INVENTION

The present invention is directed to a flash device capable of determining a reach distance of flash light before an image is photographed, and is also directed to an imaging apparatus, a camera system, and a control method for the flash device.

According to a first aspect of the present invention, there is provided a flash device as specified in claims 1 to 10. According to a second aspect of the present invention, there is provided an imaging apparatus as specified in claim 11. According to a third aspect of the present invention, there is provided a camera system as specified in claim 12. According to a fourth aspect of the present invention, there is provided a method as specified in claim 13.

Further features and aspects of the present invention will become apparent from the following detailed description of exemplary embodiments with reference to the attached drawings.

BRIEF DESCRIPTION OF THE DRAWINGS

The accompanying drawings illustrate exemplary embodiments, features, and aspects of the invention and, together with the description, serve to explain the principles of the invention.

Fig. 1 is a diagram illustrating a structure of a camera system according to an exemplary embodiment of the present invention.

Figs. 2A to 2C are diagrams illustrating an example of a light source, including a white LED, and a reflector according to an exemplary embodiment of the present invention.

Fig. 3 is a flowchart illustrating a series of operations of a camera system according to a first exemplary embodiment of the present invention.

Fig. 4 is a diagram illustrating a relationship between a shutter speed or the like, and a correction amount (exposure value (EV)) according to an exemplary embodiment of the present invention.

Fig. 5 is a flowchart illustrating operation of a flash device according to an exemplary embodiment of the present invention.

Fig. 6 is a flowchart illustrating calculation of a reach distance of flash light from a flash device according to the first exemplary embodiment of the present invention.

Figs. 7A and 7B are diagrams illustrating an example of light emission timing of a light source such as a xenon tube and a white LED.

Fig. 8 is a diagram illustrating a relationship between a reach distance and a correction amount according to an exemplary embodiment of the present invention.

Figs. 9A to 9C are diagrams illustrating a display example of a reach distance according to an exemplary embodiment of the present invention.

Fig. 10 is a diagram illustrating a camera system in a live view mode according to a second exemplary embodiment of the present invention.

Fig. 11 is a flowchart illustrating operation of the camera system in the live view mode according to the second exemplary embodiment of the present invention.

Fig. 12 is a flowchart illustrating calculation of a reach distance of flash light from a flash device according to the second exemplary embodiment of the present invention.

Figs. 13A to 13C are diagrams illustrating a display example according to the second exemplary embodiment of the present invention.

## DETAILED DESCRIPTION OF THE EMBODIMENTS

Various exemplary embodiments, features, and aspects of the invention will be described in detail below with reference to the drawings.

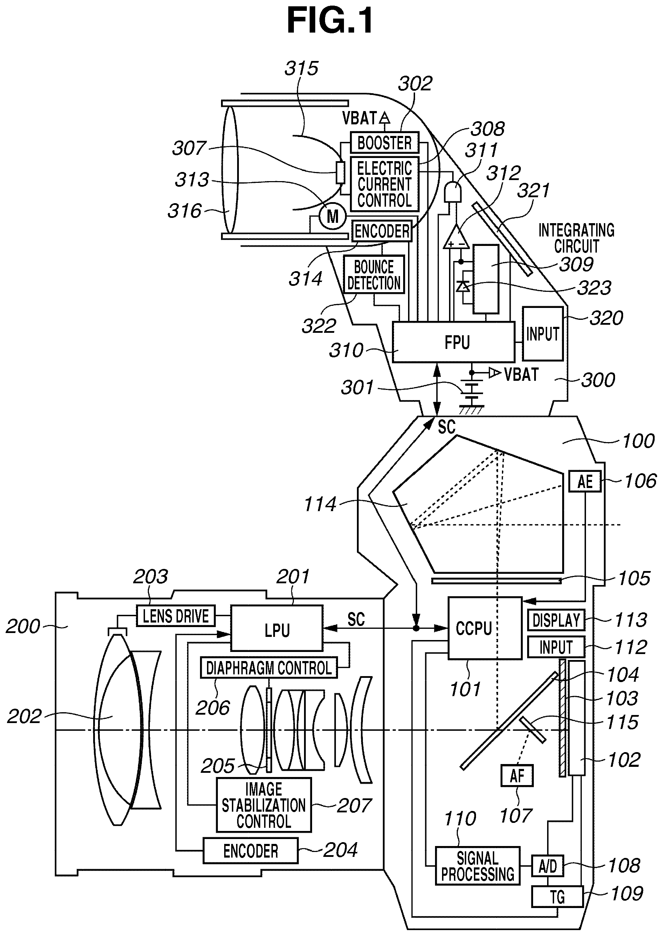

Fig. 1 is a diagram illustrating a structure of a camera system according to a first exemplary embodiment of the present invention. The camera system includes a camera body 100, a lens unit 200, and a flash device 300. The flash device 300 includes a light source other than a flash tube, for example, a white LED.

First, a structure of the camera body 100 will be described.

A camera microcomputer (CCPU) 101 controls each unit of the camera body 100. An image sensor 102, such as a charge coupled device (CCD) or a complementary metal-oxide semiconductor (CMOS), includes an infrared cut-off filter, a low-pass filter, and others. An image of an object is formed on the image sensor 102 by a lens group 202 during photographing. A shutter 103 shields the image sensor 102 from light when photographing is not performed and opens to allow light to the image sensor 102 when photographing is performed. A half mirror 104 reflects a part of the light incident from the lens group 202 to form an image on a focusing screen 105 when photographing is not performed.

A light metering circuit 106 includes a light metering sensor configured to execute light metering in each of a plurality of divided areas of an imaging plane (photographing range for an object). A focus detection circuit 107 includes a distance measuring sensor configured to have a plurality of distance measuring points, each of which is contained in the position of a corresponding one of the divided areas of the light metering sensor. The light metering sensor in the light metering circuit 106 meters light from an object image formed on the focusing screen 105 via a pentagonal prism 114.

An analog-to-digital (A/D) converter 108 converts an analog signal from the image sensor 102 into a digital signal. A timing generator (TG) 109 synchronizes an output signal from the image sensor 102 and conversion timing of the A/D converter 108. A digital signal processing circuit 110 executes image processing of the image data converted into a digital signal by the A/D converter 108 according to pre-determined parameters. A memory or the like for storing a processed image is included but is not shown in Fig. 1.

A signal line SC is used as an interface between the camera body 100, the lens unit 200 and the flash device 300. A communication clock, which is generated by the camera microcomputer 101, is used to allow communication with a flash microcomputer 310. Further, the signal line SC allows a light emission start signal to be transmitted from the camera body 100 to the flash device 300. Similarly, the signal line SC is used as an interface between the camera microcomputer 101 and a lens microcomputer 201. The signal line SC includes a terminal for transmitting data from the lens microcomputer 201 to the camera microcomputer 101, thereby allowing communication between the camera microcomputer 101 and the lens microcomputer 201.

Various input units 112 can input camera setting or the like from the outside with a switch, a button, and others. A display unit 113 displays various set modes and other photographing information on a finder and a liquid crystal device or a light emitting device at the back of the camera body 100. The pentagonal prism 114 guides an object image formed on the focusing screen 105 to the light metering sensor in the light metering circuit 106 and an optical finder (not shown). An auto focus (AF) mirror 115 guides a part of a light ray incident from the lens group 202 and penetrating through the half mirror 104 to the distance measuring sensor of the focus detection circuit 107. A power source battery or the like is included but will be omitted from the description for the sake of simplicity.

Next, a structure in the lens unit 200 connectable to the camera body 100 and operation thereof will be described.

The lens microcomputer (LPU) 201 controls operation of each part of the lens unit 200. The lens group 202 includes a plurality of lenses. A lens drive circuit 203 moves optical units for zooming and focusing. The amount of drive of the lens group 202 is calculated and determined by the camera microcomputer 101 based on an output from the focus detection circuit 107 in the camera body 100. An encoder 204 detects the amount of movement of the lens group 202 during driving of the lens group 202. The determined amount of drive is communicated from the camera microcomputer 101 to the lens microcomputer 201. The lens microcomputer 201 operates the lens drive circuit 203 by an amount corresponding to the amount of movement detected by the encoder 204. Thus, the lens group 202 is moved to an in-focus position.

A diaphragm 205 is controlled by the lens microcomputer 201 via a diaphragm control circuit 206. The focal length of the exchangeable lens unit 200 may be a single focus or may be variable as a zoom lens. An image stabilization (IS) control device 207 detects a vibration, such as a camera shake, by a gyroscope or the like (not shown) to control a lens by the lens microcomputer 201, thus preventing or reducing an image shake caused by the vibration.

Next, a structure of the flash device 300 connectable to the camera body 100 will be described.

The flash microcomputer (FPU) 310 controls the operation of each unit of the flash device 300. A battery 301 is used as a flash power source (VBAT). The booster circuit 302 boosts the voltage of the battery 301 to turn on a light source 307. The light source 307 is a light source other than a flash tube. In the first exemplary embodiment, the light source 307 is a white LED. The white LED 307 is arranged for continuously emitting light at the constant amount of light emission during a period in which the same voltage is supplied. A reflector 315 reflects light emitted from the white LED 307.

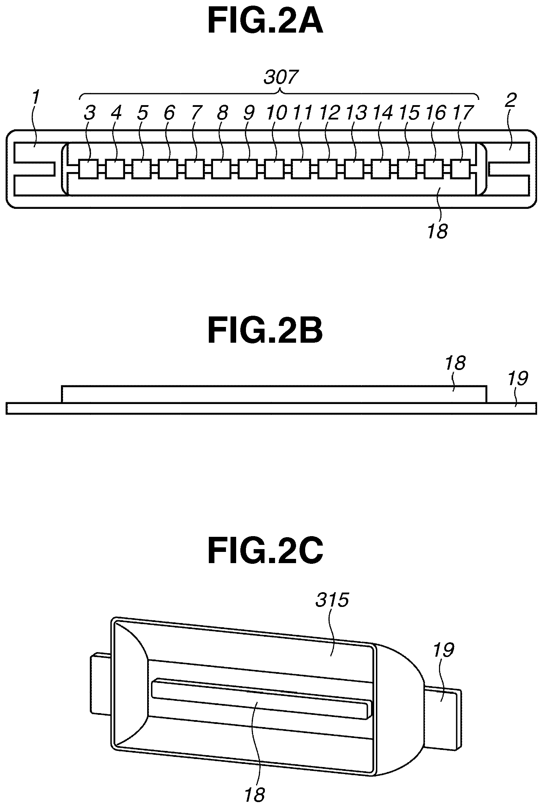

Figs. 2A to 2C illustrate an example of the white LED 307 and the reflector 315.

The white LED 307, which is an example of a light source illustrated in Fig. 1, includes ultraviolet or blue LEDs 3 to 17 connected in series to emit light in a linear fashion. When a light emission current is supplied to both electrodes 1 and 2, the ultraviolet or blue LEDs 3 to 17 are turned on.

In Fig. 2B, a phosphor 18 receives light from the ultraviolet and blue LEDs 3 to 17 and converts the received light into pseudo whitened light, so that the surface of the phosphor 18 emits light. A substrate 19 is a substrate excellent in thermal conduction, such as ceramic. The ultraviolet or blue LEDs 3 to 17 are mounted between the substrate 19 and the phosphor 18. In Fig. 2C, the reflector 315 collects a white light flux emitted by the phosphor 18 and guides the light flux to an obj ect. The phosphor 18 may includes a plurality of phosphors.

Referring to Fig. 1, an electric current control circuit 308, which provides a constant electric current, controls the starting and stopping of the light emitted by the white LED 307. A photodiode 323, serving as a sensor that receives light from the white LED 307, receives the light either directly or via a glass fiber. An integrating circuit 309 integrates the received-light electric current of the photodiode 323. The output of the integrating circuit 309 is input to an inverting input terminal of a comparator 312 and an A/D converter input terminal (not shown) of the flash microcomputer 310. A non-inverting input terminal of the comparator 312 is connected to a D/A converter output terminal (not shown) of the flash microcomputer 310. An output terminal of the comparator 312 is connected to an input terminal of an AND gate 311. Another input terminal of the AND gate 311 is connected to a light emission control terminal (not shown) of the flash microcomputer 310. The output of the AND gate 311 is then input to the electric current control circuit 308 to execute energization control of the white LED 307.

The flash device 300 further includes a zoom optical system 316, which includes a panel, such as a Fresnel lens, and changes the illuminating angle of the flash device 300. The distance of the zoom optical system 316 from the reflector 315 can be changed to change the guide number and light distribution to an object. A zoom drive unit 313, which includes a motor or the like, moves the zoom optical system 316. The amount of zoom drive of the zoom optical system 316 is input from a zoom control terminal of the flash microcomputer 310. Focal length information is supplied from the lens microcomputer 201 to the camera microcomputer 101. Then, the focal length information is communicated to the flash microcomputer 310 via the camera microcomputer 101 and a communication unit (not shown). The amount of zoom drive is calculated by the flash microcomputer 310 according to the focal length information.

An encoder 314 is a position detection unit configured to detect a zoom position of the zoom optical system 316. The encoder 314 supplies movement information to a position signal terminal (not shown) of the flash microcomputer 310. The flash microcomputer 310 operates a motor of the zoom drive unit 313 by a required amount based on the movement information to move the zoom optical system 316 to a predetermined position. Various input units 320 (input interface) include, for example, a switch mounted on the side surface of the flash device 300. Zoom information can also be input by operating the switch. A display unit 321 displays various set states of the flash device 300. A bounce detection unit 322, including a switch or the like, detects a bounce state of the flash device 300, and outputs information indicating that the flash device 300 is in the bounce state to the flash microcomputer 310.

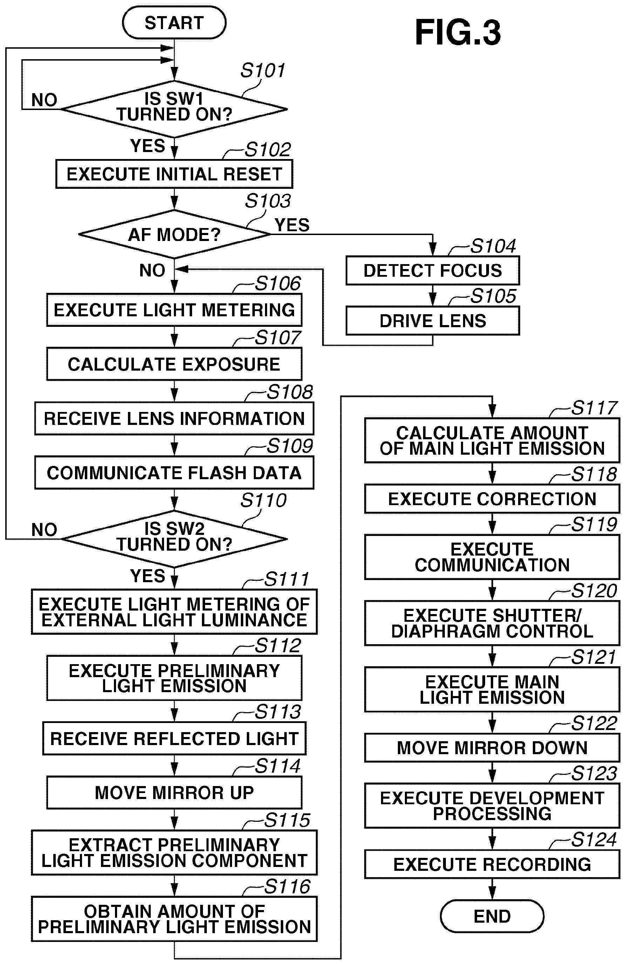

Next, a series of photographing operations of the camera system will be described with reference to the diagram of Fig. 1 and the flowchart of Fig. 3.

When the camera system starts operation, then in step S101, the camera microcomputer 101 determines whether a photographing preparation switch SW1, which is in a half-press state of a shutter button (not shown) of the input unit 112, is turned on. When the switch SW1 is not turned on (NO in step S101), the camera microcomputer 101 waits in step S101 until the SW1 is turned on. When the switch SW1 is turned on (YES in step S101), then in step S102, the camera microcomputer 101 reads a state of a switch input via the input unit 112 and input information set in advance, and executes setting (initial reset) of various photographing modes, such as a determination method of a shutter speed (TV) indicating an exposure time during photography and a determination method of an aperture value (F No.).

In step S103, the camera microcomputer 101 determines whether the camera is in a mode (AF mode) which executes an auto focus detection operation or another mode (MF mode) based on the photographing modes of the camera set in step S102. If the camera is not in the AF mode (NO in step S103), the processing directly proceeds to step S106. If the camera is in the AF mode (YES in step S103), the processing proceeds to step S104.

In step S104, the camera microcomputer 101 drives the focus detection circuit 107, thereby executing a focus detection operation using a phase difference detection method. In the focus detection operation, on which distance measuring (focus detection) point among a plurality of distance measuring points the camera is to be focused is determined by a distance measuring point set via the input unit 112, determined according to the photographing mode of the camera, or determined by an automatic selection algorithm using near-point priority. In step S105, the camera microcomputer 101 stores a distance measuring point determined in step S104 in a random access memory (RAM) (not shown) in the camera microcomputer 101. Then, the camera microcomputer 101 calculates the amount of drive of the lens group 202 based on information from the focus detection circuit 107, controls the lens drive circuit 203 via the lens microcomputer 201 based on the calculated result, and moves the lens group 202 to an in-focus position. Then, the processing proceeds to step S106.

In step S106, the camera microcomputer 101 obtains object luminance from the light metering circuit 106. In the present exemplary embodiment, an imaging plane is divided into six areas (light metering area). The object luminance can be obtained from each area. The object luminance is stored in the RAM as EVb (i) (i = 0 to 5).

In step S107, the camera microcomputer 101 determines an exposure value (EVs) from the object luminance (EVb) of each of a plurality of areas using a predetermined algorithm. Then, the camera microcomputer 101 determines a shutter speed (TV) and an aperture value (F No.) according to the set photographing mode of a camera. In step S108, the camera microcomputer 101 communicates with the lens microcomputer 201 and receives a focal length (f), operation selection of image stabilization control, an image stabilization number-of-steps (IS_EV), and others, which are information concerning the lens unit 200.

In step S109, the camera microcomputer 101 transmits photographing information and others concerning the camera to the flash microcomputer 310 via the signal line SC and a communication unit (not shown), and receives information associated with flash photography from the flash microcomputer 310. In step S110, the camera microcomputer 101 determines whether a photographing start switch SW2, which is a full-press state of the shutter button (not shown) of the input unit 112, is turned on. When the switch SW2 is not turned on (NO in step S110), the processing repeats operation of steps S101 to S110. When the switch SW2 is turned on (YES in step S110), the processing proceeds to a series of release operations starting with step S111.

In step S111, the camera microcomputer 101 obtains object luminance from the light metering circuit 106 immediately before preliminary light emission of the flash device 300. Object luminance of each of six areas of the light metering sensor is stored in the RAM (not shown) as Eva (i) (i = 0 to 5) similarly as described above. In step S112, the camera microcomputer 101 issues a command to execute preliminary light emission to the flash microcomputer 310 via the signal line SC and a communication unit (not shown). According to the command, the flash microcomputer 310 controls the booster circuit 302 and the electric current control circuit 308 to execute preliminary light emission of the predetermined amount of light for the predetermined time to illuminate an object. In step S113, the camera microcomputer 101 obtains object luminance during preliminary light emission from the light metering circuit 106. The object luminance is acquired for each of six light metering areas and is then stored in the RAM as EVf (i) (i = 0 to 5).

In step S114, the camera microcomputer 101 moves the half mirror 104 and the AF mirror 115 up prior to an exposure operation to withdraw them from the inside of a photographic optical path. In step S115, the camera microcomputer 101 executes calculation expressed by the following equation (1):

$$\mathrm{EVdf}(i) \leftarrow \mathrm{LN}_2\ (2^{\mathrm{EVf}(i)} - 2^{\mathrm{Eva}(i)}) \quad (i = 0\ \text{to}\ 5) \quad\quad (1)$$

More specifically, the camera microcomputer 101 calculates a difference between the object luminance (EVf) obtained during preliminary light emission in step S113 and the object luminance (Eva) obtained immediately before preliminary light emission in step S111 after logarithmically expanding them. Then, based on the difference, the camera microcomputer 101 extracts object luminance (EVdf(i)) of only a reflected light component of preliminary light emission. This extraction is executed for each of six light metering areas.

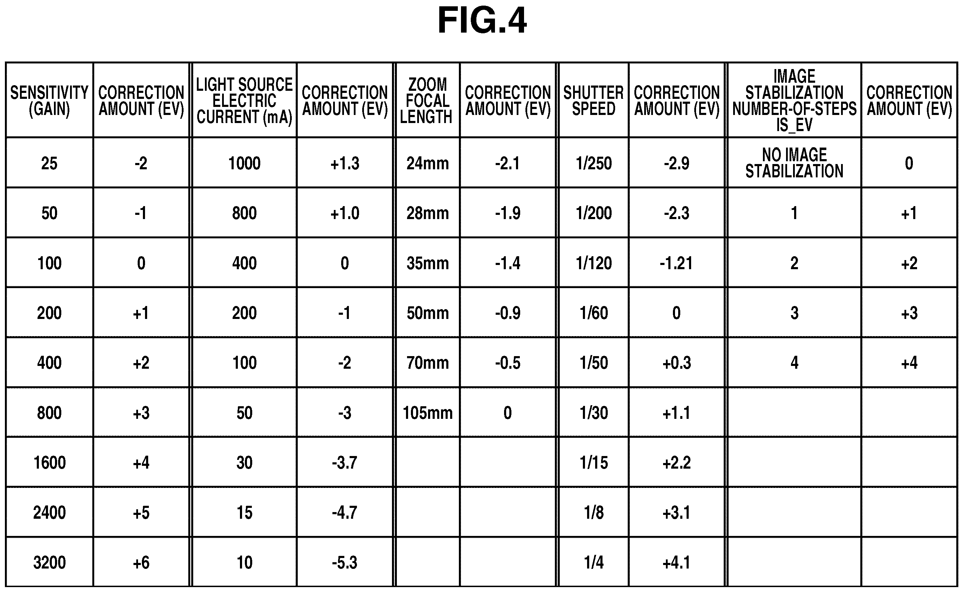

In step S116, the camera microcomputer 101 obtains the amount of light (Qpre) of preliminary light emission from the flash device 300. As illustrated in the example in Fig. 4, the amount of light (Qpre) of preliminary light emission varies depending on a drive electric current value and a zoom position in the case of a light source such as the white LED 307. In the present exemplary embodiment, since one constant electric current drive is employed, the guide number varies depending on the zoom position. In a zoom position of 24 mm wide in illumination angle, the guide number decreases by 2.1 EV relative to a zoom position of 105 mm narrow in illumination angle. In other illumination angles, the zoom positions and correction amounts are roughly shown as illustrated in Fig. 4. If a constant electric current value is changed, a correction amount corresponding to the changed electric current value is required.

As described above, the flash microcomputer 310 causes the zoom drive unit 313 and the encoder 314 to execute a zoom operation of the flash device 300 according to the focal length (f) of the lens unit 200. A value obtained according to the zoom position at this time is provided as the amount of light (Qpre) of preliminary light emission. The flash microcomputer 310 selects an area, from among the six divided areas, in which an appropriate amount of flash light is to be set to an object, based on a distance measuring point (Focus. P), the focal length (f), and the amount of light (Qpre) of preliminary light emission. The selected area is stored in the RAM as P (any one of 0 to 5).

In step S117, the camera microcomputer 101 calculates the amount of main light emission. More specifically, the camera microcomputer 101 calculates a relative ratio (r) of the amount of main light emission that is suitable to the amount of light of preliminary light emission with respect to an object of the set or selected area (P), based on an exposure value (EVs), object luminance (EVb), and a luminance value (EVdf(p)) of only preliminary light emission reflected light. Thus, the relative ratio (r) is determined by the following equation (2) :

$$r \leftarrow \text{LN}_2(2^{\text{EVs}} - 2^{\text{EVb (p)}}) - \text{EVdf(p)} \qquad (2)$$

Herein, in order to make an appropriate exposure with flash light added to external light, a difference between the exposure value (EVs) and the object luminance (EVb) after being expanded is calculated.

In step S118, the camera microcomputer 101 executes calculation of the following equation (3):

$$R \leftarrow r + \text{TV} - \text{t\_pre} + c \qquad (3)$$

More specifically, the camera microcomputer 101 corrects the relative ratio (r) using a shutter speed (TV), a light emission time (t_pre) of preliminary light emission, and an exposure correction coefficient (c) set in advance by a photographer via the input unit 112. Then, the camera microcomputer 101 calculates a new relative ratio (r). Herein, in order to accurately compare a light metering integrated value (INTp) of preliminary light emission and a light metering integrated value (INTm) of main light emission in the flash device 300, correction is made using the shutter speed (TV) and the light emission time (t_pre) of preliminary light emission.

In step S119, the camera microcomputer 101 transmits the relative ratio (r) to the amount of light of preliminary light emission to determine the amount of main light emission to the flash microcomputer 310 via the signal line SC. Then, in step S120, the camera microcomputer 101 commands the lens microcomputer 201 to set an aperture value (F No.) based on the determined exposure value (EVs). Then, the camera microcomputer 101 controls the shutter 103 via a shutter control circuit (not shown) to set the determined shutter speed (TV).

In step S121, the camera microcomputer 101 issues a light emission signal for main light emission to the flash microcomputer 310 via the signal line SC in synchronization with full open of the shutter 103. Then, the flash microcomputer 310 executes main light emission control to set an appropriate amount of light emission based on the relative ratio (r) transmitted from the camera microcomputer 101.

When such a series of exposure operations is completed, then in step S122, the camera microcomputer 101 moves the half mirror 104 and the AF mirror 115, which have been withdrawn from the photographic optical path, down to locate them obliquely in the photographic optical path. In step S123, the camera microcomputer 101 converts pixel data from the image sensor 102 into a digital signal using the A/D converter 109. The camera microcomputer 101 executes predetermined signal processing such as white balance on the converted pixel data using the digital signal processing circuit 110. Then, in step S124, the camera microcomputer 101 stores the processed image data in a memory (not shown) and ends a routine of photographing.

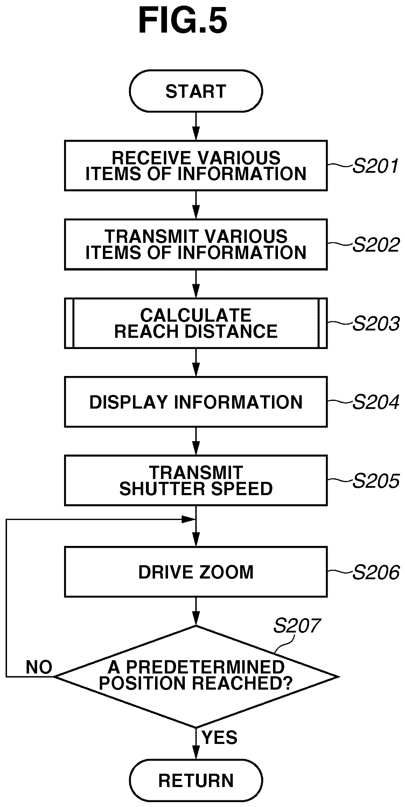

Next, operation of the flash device 300 mounted on the camera body 100 will be described using a flowchart illustrated in Fig. 5. The flash device 300 waits for information to be transmitted from the camera body 100 in step S109 illustrated in Fig. 3.

In step S201, the flash microcomputer 310 receives various items of information from the camera microcomputer 101 via the signal line SC and a communication unit (not shown). More specifically, the flash microcomputer 310 receives photographing information, such as sensitivity (gain) information (ISO), a focal length (f), an aperture value (F No.), a shutter speed (TV), a flash synchronization speed (tx), the presence or absence of image stabilization control, and an image stabilization number-of-steps (IS_EV), which is a guide number (GNo.) correction amount by image stabilization. Next, in step S202, the flash microcomputer 310 similarly transmits various items of information to the camera microcomputer 101 via a communication unit (not shown) and the signal line SC. More specifically, the flash microcomputer 310 transmits information associated with flash photography, such as guide number (G No.) data, the amount of light (Qpre) of preliminary light emission, a drive electric current (I) for the white LED, zoom information (Zoom), and a bounce mode.

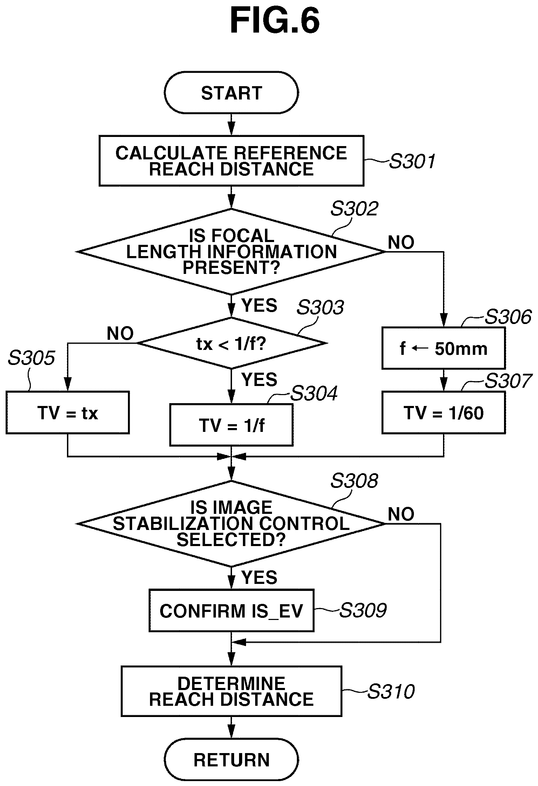

In step S203, the flash microcomputer 310 calculates a reach distance of flash light from the flash device 300 based on the photographing information received from the camera microcomputer 101. The details of this routine will be described below with reference to Fig. 6. In step S204, the flash microcomputer 310 displays the reach distance and information associated with flash photography on the finder or the display unit 321 at the back of the flash device 300. In step S205, the flash microcomputer 310 transmits information on a shutter speed (TV) determined in step S203 to the camera microcomputer 101 via the signal line SC and a communication unit (not shown). Then, in steps S206 and S207, the flash microcomputer 310 drives the zoom drive unit 313 based on the focal length (f) received from the camera microcomputer 101 to move the zoom optical system 316 to a predetermined position corresponding to the focal length of the lens unit 200 and sets an illumination angle of the flash device 300. Then, the flash microcomputer 310 completes a series of sequences and returns to a communication waiting state.

Next, calculation of the reach distance of flash light (also referred to as a flash reach distance) from the flash device 300 executed in step S203 illustrated in Fig. 5 will be described with reference to a flowchart illustrated in Fig. 6.

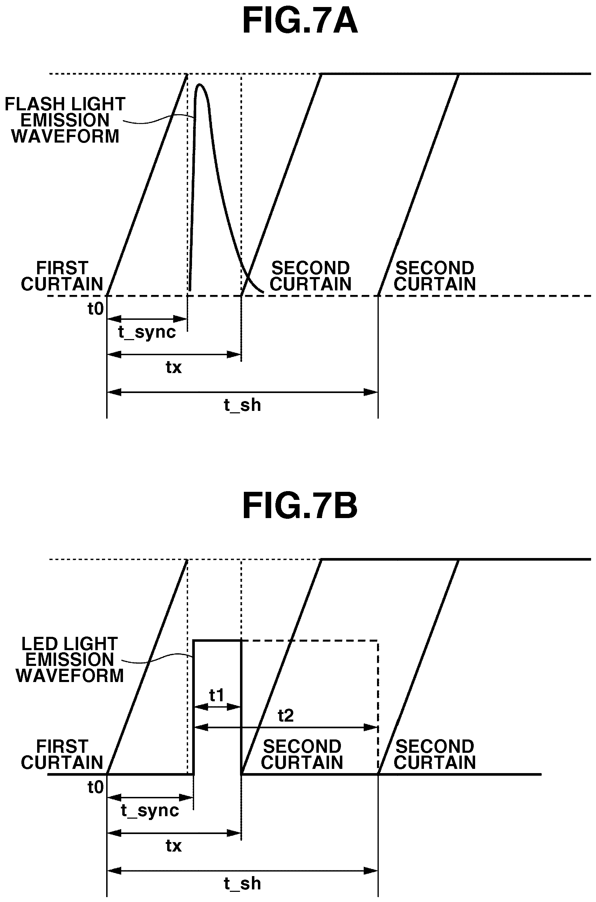

In step S301, the flash microcomputer 310 executes calculation of a reference flash reach distance (also referred to as a reference reach distance). Figs. 7A and 7B illustrate timing of shutter opening of a focal-plane shutter in the camera body 100 and timing of light emission of a flash device using a light source such as a xenon tube (flash tube) and the white LED 307.

In a flash device using a xenon tube, which is a conventional flash tube, as illustrated in Fig. 7A, the first curtain travels at time t0, flash light emission is started when the shutter is fully opened after a period t_sync, and the second curtain travels after flash light emission is completed. Herein, a flash synchronization speed (tx) is conventionally set at around 1/60 second. Thus, even in a flash device for a studio with a relatively long flash time, a flash waveform can be covered within the flash synchronization speed. Recently, in many flash devices, the flash synchronization speed can be set at 1/200 second to 1/250 second to match an increase in travelling speed of the shutter and a flash device relatively short in flash time mountable on a camera.

As illustrated in Fig. 7A, in the case of a flash device using a xenon tube, even if the shutter speed (TV) is made slower than the flash synchronization speed (tx), the flash device completes light emission by discharging energy of the main capacitor. Consequently, even if the period tx is extended a period t_sh, the guide number is not increased. Accordingly, in a speed equal to or longer than the flash synchronization speed (tx), the flash reach distance is determined by the guide number (G No.) of the flash device and the aperture value (F No.) during photographing.

On the other hand, in the case of, for example, the white LED 307 other than a xenon tube, a voltage of the battery 301 illustrated in Fig. 1 is boosted by the booster circuit 302 and converted into a constant electric current by the electric current control circuit 308. Since the white LED 307 is turned on with the constant electric current, the white LED 307 can continuously be turned on for a relatively long time. Fig. 7B illustrates timing of shutter opening of a focal-plane shutter in a flash device that uses a light source other than a xenon tube and timing of flash light emission. As illustrated in Fig. 7B, the first curtain travels at time t0, flash light emission is started when a shutter is fully opened after a period t_syn, and flash light emission is continued for a period t1 until the second curtain travels.

In the flash device 300 in the first exemplary embodiment using the white LED 307 as a light source, if the shutter speed (TV) becomes longer than the flash synchronization speed (tx), a flash emission time extends from the period t1 to a period t2. For this reason, the guide number is increased as indicated by the following equation (4):

$$\text{GNo. (2)} = \text{GNo. (1)} \times \sqrt{(t2/t1)} \qquad (4)$$

where GNo. (1) is a guide number when the white LED 307 is turned on for the period t1, and GNo. (2) is a guide number when the white LED 307 is turned on for the period t2. Accordingly, if the period t2 is made infinite, the guide number is also made infinite.

However, when the white LED 307 is infinitely turned on for an exposure, a vibration such as a camera shake occurs. Therefore, an exposure time may be determined to be a finite speed that allows occurrence of the vibration. Accordingly, in the present exemplary embodiment, a flash reach distance when the white LED 307 is used as a light source is determined by a guide number (GNo.) of the white LED 307, which is determined by a vibration allowable turning-on time (vibration allowable speed = vibration limited speed) and an aperture value (FNo.) during photographing.

The above description has been made by focusing attention on a turning-on time for purpose of simplification. However, a factor that determines a guide number including a turning-on time is as follows:

$$\text{GNO.} \propto \sqrt{(\text{ISO})} \propto \sqrt{(\text{Iq})} \propto \sqrt{(\text{t})}$$

where ISO is sensitivity (gain), Iq is light source luminance (roughly proportional to a turning-on electric current value) such as that of the white LED 307, and t is a turning-on time such as that of the white LED 307. In addition, the guide number is also changed by a change in guide number due to zoom of the flash device 300 or the presence or absence of an image stabilization function, which can extend the shutter speed (TV).

In step S301 illustrated in Fig. 6, since the guide number (GNo.) of the flash device 300 is changed by the shutter speed (TV), first a guide number condition for which the standard is set is determined. In each factor illustrated in Fig. 4, a correction amount for the reference factor is set to "0". More specifically, sensitivity (gain) of 100, a white LED electric current (I) to be indicated as a light source electric current of 400 mA, a flash zoom focal length (Zoom_ST) of 105 mm, a flash synchronization speed (tx) of 1/60 second, which is a common value, and the absence of image stabilization (IS_EV = 0) are set as references. Then, a reference guide number (GNO_STD) is determined. The guide number during photographing is changed according to a change in these factors, and a flash reach distance is thus changed. The reference guide number (GNO_STD) is stored in each flash device and corrected using a correction amount that is determined by a change in each factor.

According to the above-described condition, the reference flash reach distance to be acquired in step S301 is determined by the following equation (5) with a stored reference guide number (GNO_STD) and an aperture value (FNo.) from the camera microcomputer 101.

$$\text{reference reach distance (m)} = (\text{GNO\_STD})/(\text{FNo.}) \quad (5)$$

Referring back to Fig. 6, after the reference reach distance is set in step S301, the processing proceeds to step S302. In step S302, when the flash microcomputer 310 determines that focal length information of the lens unit 200 is contained in photographing information received from the camera microcomputer 101 (YES in Step S302), the processing proceeds to step S303. In step S303, the flash microcomputer 310 compares the shutter speed corresponding to the value of the reciprocal (1/f) of the focal length and the flash synchronization speed (tx) set in the camera body 100. A vibration allowable speed for a usual camera shake is determined to be the shutter speed corresponding to the value of the reciprocal (1/f) of the focal length (f). This determination is also applied to the present exemplary embodiment. When the shutter speed corresponding to the value of the reciprocal (1/f) of the focal length is determined to be longer than the flash synchronization speed (tx) (YES in step S303), the processing proceeds to step S304. In step S304, the flash microcomputer 310 sets the shutter speed corresponding to the value of the reciprocal (1/f) of the focal length as the shutter speed (TV). When the shutter speed corresponding to the value of the reciprocal (1/f) is determined to be shorter than or equal to the flash synchronization speed (tx) (NO in step S303), the processing proceeds to step S305. In step S305, the flash microcomputer 310 sets the flash synchronization speed (tx) as the shutter speed (TV). Then, the processing proceeds to step S308.

In the above-described step S302, when the flash microcomputer 310 determines that the focal length (f) is absent in the photographing information received from the camera microcomputer 101 (NO in step S302), the processing proceeds to step S306. In step S306, the flash microcomputer 310 sets a standard focal length of 50 mm. In step S307, the flash microcomputer 310 sets 1/60 second, which is a common value of the shutter speed (TV), as the flash synchronization speed (tx). Then, the processing proceeds to step S308.

In step S308, the flash microcomputer 310 determines whether operation selection of image stabilization control is present based on the photographing information received from the camera microcomputer 101. When it is determined that image stabilization is operated (the image stabilization function is used), the processing proceeds to step S309. In step S309, the flash microcomputer 310 confirms information on the image stabilization number-of-steps (IS_EV), which indicates how many steps of the shutter speed (TV) can be shifted during image stabilizing. The processing then proceeds to step S310. If, in step S308, it is determined that the image stabilization function is not provided or the image stabilization function is not operated (the image stabilization function is not used), the processing directly proceeds to step S310.

In step S310, the flash microcomputer 310 determines a flash reach distance from the reference guide number (GNO_STD) based on a correction amount in each factor illustrated in Fig. 4. For example, in the photographing information from the camera microcomputer 101, sensitivity (gain) is 400, the white LED electric current (I) is 400 mA, the flash zoom focal length (Zoom_ST) is 50 mm, and the lens focal length (f) is 50 mm. Further, the flash synchronization speed (tx) set in the camera is 1/50 second and the image stabilization number-of-steps (shutter speed contribution number-of-steps with image stabilization function) (IS_EV) is two steps (which is confirmed in step S309). In this case, on the above-described condition, the correction amount in Fig. 4 is +2 when sensitivity (gain) is increased from 100 → 400. Further, the correction amount is 0 when the white LED electric current (I) is 400 mA → 400 mA. The correction amount is -0.9 when the zoom focal length (Zoom_ST) is 105 mm → 50 mm. Furthermore, the correction amount is +0.3 when the shutter speed (TV) is 1/60 → 1/50, and the image stabilization number-of-steps (IS_EV) is 0 → 2. Accordingly, the correction amount (a) is determined by the following equation (6):

$$\texttt{correction amount (a) = 2(gain) + 0(I) - 0.9(Zoom\_ST) +}$$
$$\texttt{0.3(TV) + 2(IS\_EV) = +3.4 steps} \qquad \texttt{(6)}$$

In a calculation result on the above-described condition, a correction amount of +3.4 steps is obtained.

In step S301, the reference guide number (GNO._STD) is 45 and the aperture value (FNO.) is FNo. 5.6. In this case, the reference reach distance is determined by the following equation (7) :

$$\texttt{reference reach distance = (GNO.\_STD)/(FNo.) = 45/5.6 =}$$
$$\texttt{8 (m)} \qquad\qquad \texttt{(7)}$$

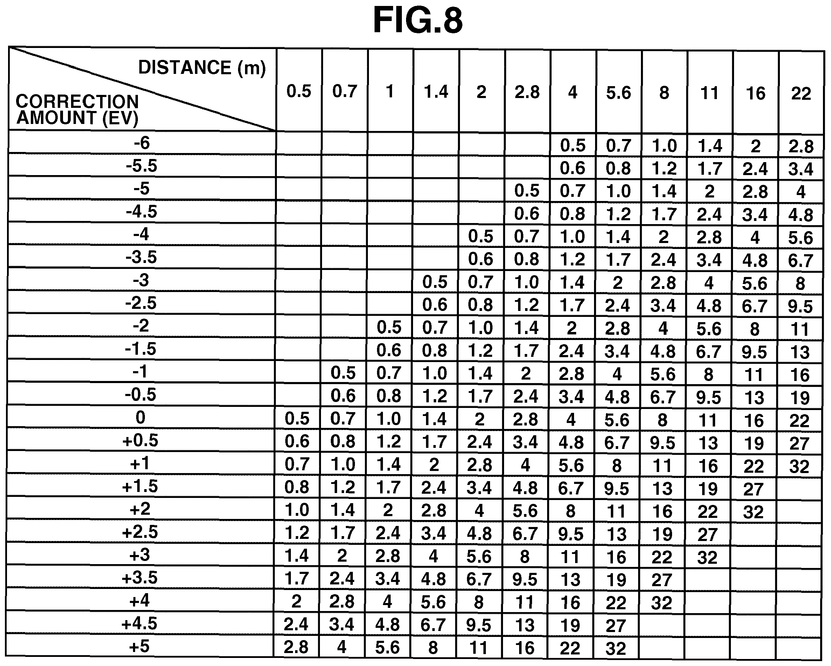

A relationship between the reference reach distance and the correction amount is illustrated in Fig. 8. In Fig. 8, the reference guide number and the reference reach distance, which is determined by an aperture value during photographing, are designated in the horizontal direction, and the correction amount is designated in the vertical direction. In the present exemplary embodiment, the reference reach distance is 8 m, and correction of about +3.5 steps (round off +3.4 steps) is added as the correction amount. In this case, a distance to be designated at a point of intersection between a reference reach distance of 8 m and a correction amount of +3.5 steps is 27 m. Thus, an actual reach distance is obtained as a calculation result of 27 m.

Further, when image stabilization is absent, the correction amount (b) is determined by the following equation (8) :

$$\texttt{correction amount (b) = 2(gain) + 0(I) - 0.9(Zoom\_ST) +}$$
$$\texttt{0.3(TV) = 1.4 steps} \qquad\qquad \texttt{(8)}$$

When image stabilization is absent, the correction amount is about +1.5 steps (round off +1.4 steps) with respect to a reference reach distance of 8 m based on the reference guide number. A calculation result of 13 m is obtained from Fig. 8.

Furthermore, on the same condition, when information on the lens focal length is absent in the photographing information, calculation is made using a lens focal length as 50 mm and a shutter speed (TV) as 1/60 second, which is a usual synchronization speed. In this case, when an image stabilization function is absent or an image stabilization function is switched off, the correction amount (c) is determined by the following equation (9):

$$\texttt{correction amount (c) = 2(gain) + 0(I) - 0.9(Zoom\_ST) +}$$
$$\texttt{0(TV) = 1.1 steps} \qquad\qquad \texttt{(9)}$$

When image stabilization is absent, the correction amount is about +1.0 step (round off +1.1 steps) with respect to a reference reach distance of 8 m based on the reference guide number. A calculation result of 11 m is obtained from Fig. 8.

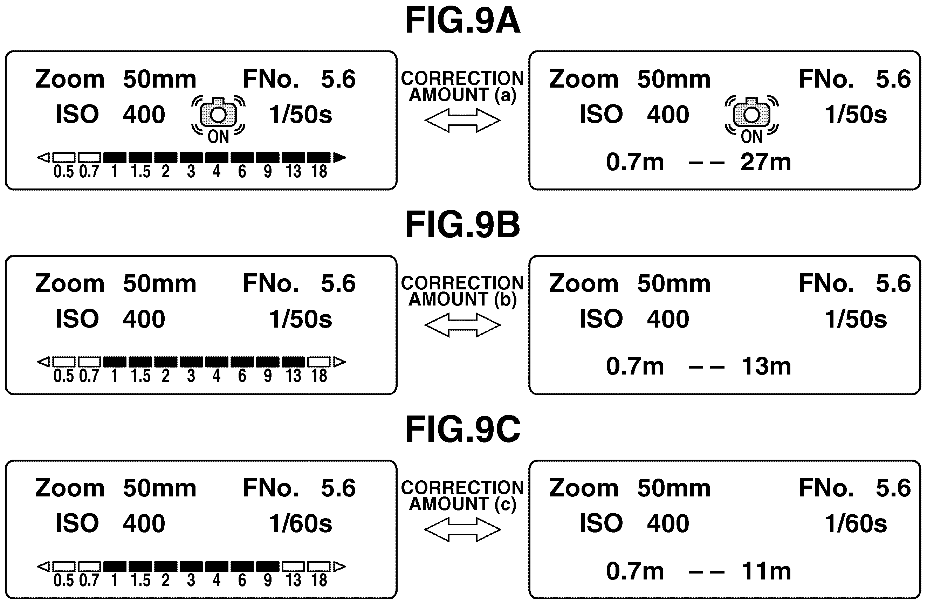

These correction amounts (a) to (c) are displayed on a finder or the display unit 321 at the back as required data in step S204 illustrated in Fig. 5 as bar display on the left side and distance display of the absolute value on the right side, as illustrated in Figs. 9A to 9C.

As described above, since a flash reach distance varies depending on a turning-on time (exposure time) of a light source in the flash device 300 using the white LED 307, calculation is required to be made using an photographing condition including a camera shake.

In the first exemplary embodiment, the shutter speed corresponding to the value of the reciprocal (1/f) of a focal length (f) of the lens is used as a condition of the shutter speed (TV) for a camera shake. However, the condition may also include data on a vibration allowable speed, which can individually be allowed for each lens as information concerning the lens unit 200.

When a telephoto lens whose focal length is 200 mm or 250 mm or longer is used, a vibration allowable speed is made shorter than the flash synchronization speed. However, for example in such a telephoto lens, in the present exemplary embodiment, the vibration allowable speed is determined to be the flash synchronization speed (tx) of the camera body 100 in step S305.

This is to prevent, when a super telephoto lens (e.g., focal length of 600 mm to 1200 mm) is used, a phenomenon that the second shutter curtain starts traveling before traveling of the first shutter curtain to the full open state (before the period t_sync) so that a light source is not turned on or that the guide number becomes extremely low even after the first curtain is fully opened.

Further, a description has been made in which the flash synchronized time (tx) is the same time as a flash device using a xenon tube. However, when the flash device 300 uses a light source such as the white LED 307 other than a xenon tube, a separate flash synchronization speed may individually be set. Furthermore, light emission start of a flash device that uses a light source such as the white LED 307 is performed after the first curtain is fully opened at the elapse of the period t_sync. However, light emission may be started when the first curtain starts travelling and may be ended when the second curtain completes travelling (shutter is closed). Still furthermore, a description has been made such that the image stabilization control device 207 is provided in the lens unit 200. However, the image stabilization control device 207 may be provided in the camera body 100.

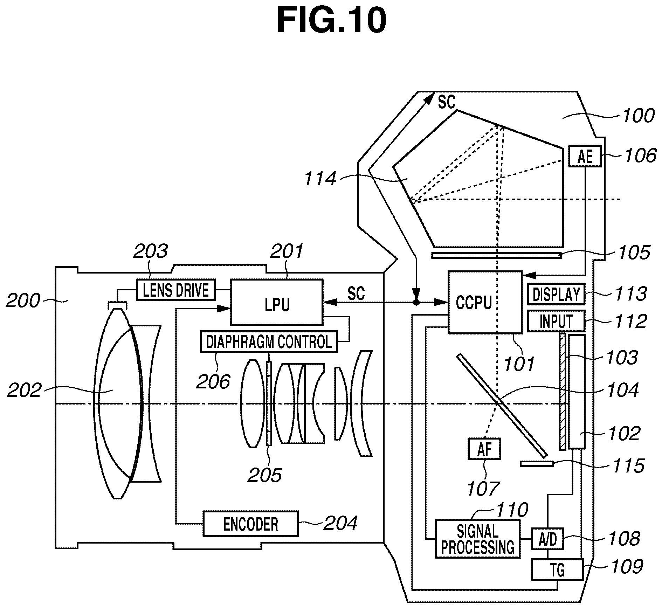

Next, a camera system according to a second exemplary embodiment of the present invention will be described. A configuration of the camera system is similar to that illustrated in Fig. 1. Thus, only the camera body 100 and the lens unit 200 in a live view mode are illustrated in Fig. 10.

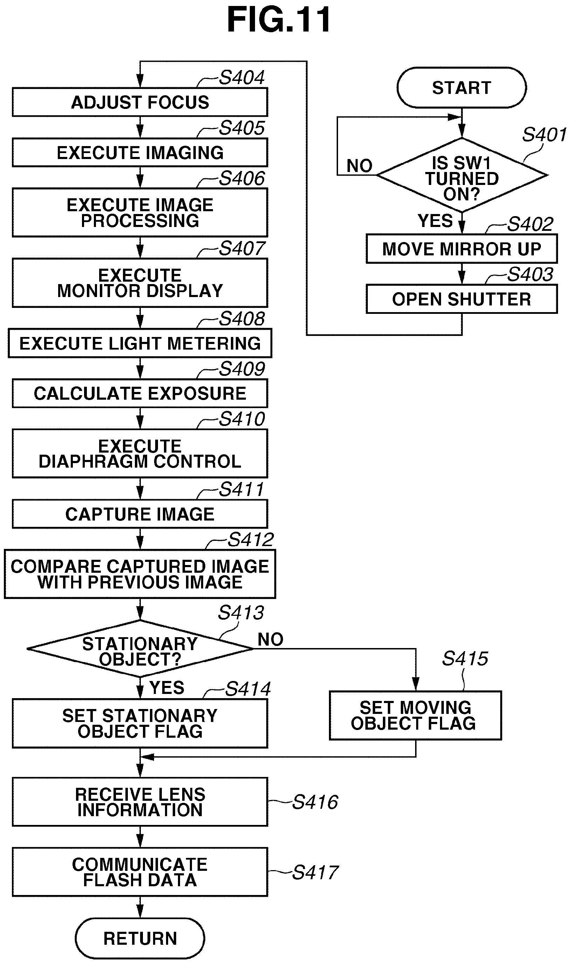

Fig. 11 is a flowchart illustrating operation of a main portion when the live view mode is set in the camera system according to the second exemplary embodiment of the present invention.

First, in step S401, the camera microcomputer 101 determines whether a switch SW1, which is a state of half press of a release button (not shown) of the input unit 112, is turned on. If the switch SW1 is not turned on (NO in step S401), the step S401 is repeated. Then, if the switch SW1 is turned on (YES in step S401), the processing proceeds to step S402.

In step S402, the camera microcomputer 101 controls a mirror by a mirror control circuit (not shown) as illustrated in Fig. 10. The camera microcomputer 101 causes the half mirror 104 to be rotated to permeate a light ray which reaches the image sensor 102 from the lens group 202 and also to be moved in a position which guides reflected light to a distance measuring sensor in the focus detection circuit 107. The AF mirror 115 is simultaneously withdrawn to a position that does not interfere with these light fluxes.

In step S403, the camera microcomputer 101 controls a shutter control circuit (not shown) to open the shutter 103 and guides a light flux from the lens group 202 to the image sensor 102. Then, in step S404, the camera microcomputer 101 executes focus detection with a phase difference by the focus detection circuit 107. Then, the camera microcomputer 101 communicates with the lens microcomputer 201 via the signal line SC, instructs a moving direction and the amount of movement of a focus lens, and issues a drive command to the lens drive circuit 203. The lens microcomputer 201 controls the lens drive circuit 203 according to information from the camera microcomputer 101, thus driving a focus lens of the lens group 202 by a predetermined amount.

When the focus lens of the lens group 202 is driven and focus adjustment is completed, the processing proceeds to step S405, in which the camera microcomputer 101 executes an imaging operation. More specifically, the camera microcomputer 101 converts an analog signal from the image sensor 102 into a digital signal by the A/D converter 108 with conversion timing synchronized by the timing generator (TG) 109. In step S406, the camera microcomputer 101 executes predetermined image processing on image data converted into a digital signal. In step S407, the camera microcomputer 101 displays a display image obtained by image processing on the display unit 113.

In step S408, the camera microcomputer 101 executes light metering based on the obtained image data. Then, in step S409, the camera microcomputer 101 executes a predetermined Additive System of Photographic Exposure (APEX) calculation to calculate a shutter speed (TV) and an aperture value (FNo.), and stores the calculated values in a memory (not shown). These stored values can be used for photographing of a still image when the switch SW2 is turned on to capture a still image during the live view mode.

In step S410, the camera microcomputer 101 communicates with the lens microcomputer 201 via the signal line SC, and sets the diaphragm 205 for the lens group 202 to the aperture value (FNo.) obtained in step S409 with the diaphragm control circuit 206. Then, in step S411, the camera microcomputer 101 converts an analog signal from the image sensor 102 into a digital signal by the A/D converter 108 with conversion timing synchronized by the timing generator (TG) 109, newly captures an image, and stores the image in a memory (not shown). In step S412, the camera microcomputer 101 compares the image previously stored in the memory and the image newly stored in the memory.

In step S413, the camera microcomputer 101 determines whether the captured image is a moving object or a stationary object based on a result of comparison in step S412. If the captured image is a stationary image (YES in step S413), the processing proceeds to step S414. In step S414, the camera microcomputer 101 sets a stationary object flag. If the captured image is a moving object (NO in step S413), the processing proceeds to step S415. In step S415, the camera microcomputer 101 sets a moving object flag.

Then, the processing proceeds to step S416. In step S416, the camera microcomputer 101 communicates with the lens microcomputer 201. Then, the camera microcomputer 101 receives a focal length (f), distance information to an object (D), operation selection of image stabilization control, an image stabilization number-of-steps (IS_EV), and others, which are information concerning the lens unit 200.

In step S417, the camera microcomputer 101 transmits photographing information and others concerning the camera body 100 to the flash microcomputer 310 via the signal line SC and receives information associated with flash photography from the flash microcomputer 310.

The camera microcomputer 101 repeats the above-described operation until the switch SW2 is turned on.

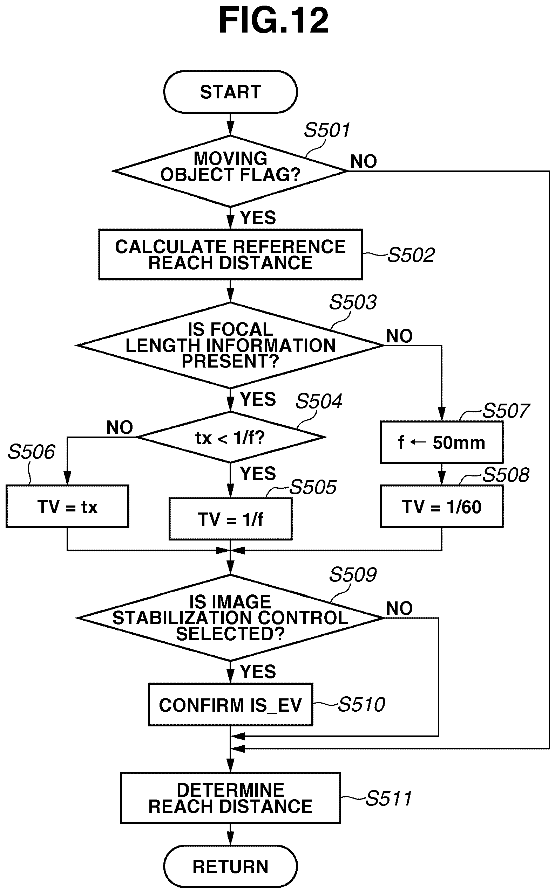

A sequence in Fig. 5 described in the above-described first exemplary embodiment is also similar to that in the second exemplary embodiment. However, calculation processing of a flash reach distance to be executed in step S203 is different from that in the first exemplary embodiment illustrated in Fig. 6. Accordingly, calculation of a flash reach distance according to the second exemplary embodiment will be described with reference to a flowchart illustrated in Fig. 12.

The flash microcomputer 310 receives photographing information concerning the camera body 100 from the camera microcomputer 101 in step S201 illustrated in Fig. 5. Various items of information to be received are photographing information such as sensitivity (gain) information, a focal length (f), an aperture value (FNo.), a shutter speed (TV), a flash synchronization speed (tx), the presence or absence of image stabilization, an image stabilization number-of-steps (IS_EV) serving as a GNo. correction value by image stabilization, a moving object flag/stationary object flag, etc. In the second exemplary embodiment, photographing information such as a moving object flag/stationary object flag that indicates whether the captured image is a moving object or a stationary object is added compared with the above-described first exemplary embodiment. In step S501, the flash microcomputer 310 determines whether the captured image is a moving object based on the received flag information. If the captured image is a moving object (YES in step S501), the processing proceeds to step S502. If the captured image is not a moving object (NO in step S501), the processing proceeds to step S511.

In step S502, the flash microcomputer 310 calculates a reference flash reach distance. Herein, sensitivity (gain) is 100, the white LED electric current (I) is 400 mA, the flash zoom focal length (Zoom_ST) is 105 mm, the flash synchronization speed (tx) is 1/60 second, which is a usual value, and image stabilization control is absent (IS_EV = 0). Then, similarly to the first exemplary embodiment, in the second exemplary embodiment, the reference guide number (GNO_STD) is determined by the above-described condition. The reference guide number (GNO_STD) is stored in each flash device and corrected by a correction amount to be determined by a change in each factor. The reference reach distance is determined by the stored reference guide number (GNO_STD) and an aperture value (FNo.) from the camera microcomputer 101. Thus, the reference reach distance is determined by the following equation (10):

$$\text{reference reach distance (m)} = (\text{GNO\_STD})/(\text{FNo.}) \quad (10)$$

In step S502, the flash microcomputer 310 sets the reference reach distance. Then, in step S503, the flash microcomputer 310 determines whether focal distance information on the lens unit 200 is present in the photographing information received from the camera microcomputer 101. If the focal length information is present (YES in step S503), the processing proceeds to step S504. In step S504, the flash microcomputer 310 compares the shutter speed corresponding to the value of the reciprocal (1/f) of the focal length as a vibration allowable speed with the flash synchronization speed (tx) of the camera body 100. When it is determined that the shutter speed corresponding to the value of the reciprocal (1/f) of the focal length is longer than the flash synchronization speed (tx) (YES in step S504), the processing proceeds to step S505. In step S505, the flash microcomputer 310 sets the shutter speed corresponding to the value of the reciprocal (1/f) of the focal length as the shutter speed (TV). When it is determined that the shutter speed corresponding to the value of the reciprocal (1/f) of the focal length is shorter than or equal to the flash synchronization speed (tx) (NO in step S504), the processing proceeds to step S506. In step S506, the flash microcomputer 310 sets the flash synchronization speed (tx) as the shutter speed (TV). Then, in any case, the processing proceeds to step S509.

Further, when it is determined that the focal length (f) information is not included in the photographing information received from the camera microcomputer 101 in step S503 (NO in step S503), the processing proceeds to step S507. In step S507, the flash microcomputer 310 sets the focal length (f) to a standard focal length of 50 mm. Then, in step S508, the flash microcomputer 310 shall sets 1/60 second, which is a usual value as the flash synchronization speed (tx), as the shutter speed (TV). Then, the processing proceeds to step S509.

In step S509, the flash microcomputer 310 determines whether operation selection of the image stabilization control device 207 is present based on the photographing information received from the camera microcomputer 101. If the image stabilization control device 207 is operated (YES in step S509), the processing proceeds to step S510. In step S510, the flash microcomputer 310 confirms information on an image stabilization number-of-steps (IS_EV), which indicates how many steps of a shutter speed (TV) in the image stabilization function can be shifted. The processing then proceeds to step S511.

In the above-described step S509, when it is determined that the image stabilization function is absent in the lens unit 200 or the image stabilization control device 207 is not operated, the processing directly proceeds to step S511.

In step S511, the flash microcomputer 310 determines a flash reach distance from the reference guide number based on a correction amount in each factor illustrated in Fig. 4. For example, in the photographing information from the camera microcomputer 101, similarly to the above-described first exemplary embodiment, sensitivity (gain) is 400, the white LED electric current (I) is 400 mA, and the flash zoom focal length (Zoom_ST) is 50 mm. Further, the lens focal length (f) is 50 mm, the flash synchronization speed (tx) of the camera is 1/120 second, the image stabilization number-of-steps (IS_EV) is two steps (which is confirmed in step S510), and the moving object flag is set to 1. Herein, when sensitivity (gain) is 100 → 400, the correction amount is +2, and when the white LED electric current is 400 mA → 400 mA, the correction amount is 0. Further, when the flash zoom focal length is 105 mm → 50 mm, the correction amount is -0.9, when the shutter speed (TV) is 1/60 → 1/50, the correction amount is +0.3, and the image stabilization number-of-steps (IS_EV) is 0 → 2. In this case, on the above-described photographing condition, the correction amount (a) in Fig. 4 is determined by the following equation (11):

$$\text{correction amount (a)} = 2(\text{gain}) + 0(\text{I}) - 0.9(\text{Zoom\_ST}) +$$
$$0.3(\text{TV}) + 2(\text{IS\_EV}) = +3.4 \text{ steps} \qquad (11)$$

In a calculation result on the above-described condition, the correction amount is +3.4.

When the reference guide number (GNO._STD) is 45 and aperture value information (FNo.) is FN0. 5.6, the photographing distance is determined by the following equation (12) :

$$\text{photographing distance} = (\text{GNO.\_STD})/(\text{FNo.}) = 4.5/5.6 = 8$$
$$(\text{m}) \qquad (12)$$

A relationship between the photographing distance based on the reference guide number and the correction amount is illustrated in Fig. 8. In Fig. 8, the reference guide number and the photographing distance, which is determined according to an aperture value during photographing, are designated in the horizontal direction, and the correction amount is designated in the vertical direction. In the second exemplary embodiment, when correction of about +3.5 steps (round off +3.4 steps) at a distance of 8 m is added to no correction, a distance to be designated at a point of intersection of these numerical values is 27 m. Thus, the reach distance is obtained as a calculation result of 27 m.

Further, when image stabilization is absent, the correction amount (b) is determined by the following equation (13) :

$$\text{correction amount (b)} = 2(\text{gain}) + 0(\text{I}) - 0.9(\text{Zoom\_ST}) +$$
$$0.3(\text{TV}) = 1.4 \text{ steps} \qquad (13)$$

When image stabilization is absent, a correction amount is about +1.5 steps (round off +1.4 steps) with respect to a reference reach distance of 8 m based on the reference guide number. Thus, the calculation result is obtained as 13 m from Fig. 8.

Further, when the lens focal length information is absent in the photographing information on the same condition, the lens focal length (f) is 50 m and the shutter speed (TV) is 1/60 second, which is a usual synchronization speed. In this case, when the image stabilization function is absent or the image stabilization function is turned off, the correction amount (c) is determined by the following equation (14):

$$\text{correction amount (c)} = 2(\text{gain}) + 0(\text{I}) - 0.9(\text{Zoom\_ST}) +$$

$$0(\text{TV}) = 1.1 \text{ steps} \qquad\qquad (14)$$

When the image stabilization is absent, the correction amount is about +1.0 steps (round off +1.1 steps) with respect to a reference reach distance of 8 m based on the reference guide number. Thus, the calculation result is obtained as 11 m from Fig. 8.

These correction amounts (a) to (c) are displayed in step S204 illustrated in Fig. 5 as bar display on the left side and distance display of the absolute value on the right side as illustrated in Figs. 9A to 9C.

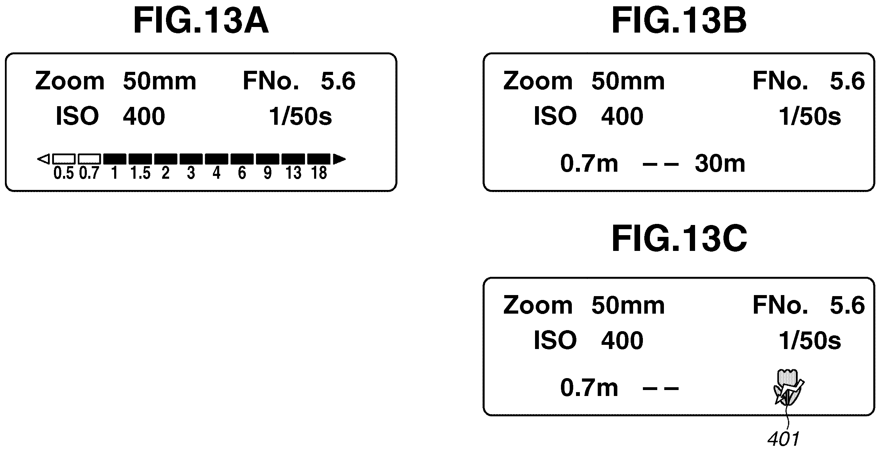

Further, when the captured image is a stationary object based on flag information from the camera microcomputer 101 in the above-described step S501, the processing directly proceeds to step S511 as described above. In this case, since an image shake is absent, the shutter speed (TV) can be made longer. In a flash device using the white LED 307 or the like as a light source, the guide number varies depending on a turning-on time (t) of the light source as given by GNO. $\propto \sqrt{(t)}$. Accordingly, the guide number is ideally made infinite. A flash reach distance in this case is illustrated in Figs. 13A to 13C.

As illustrated in Fig. 13A, in bar display, the bar may be extended to a maximum distance. As illustrated in Fig. 13B, in distance display of the absolute value or the like, display may be made as a maximum distance in specifications. Further, as illustrated in Fig. 13C, a flash reach distance may be displayed using a specific mark, such as a mark 401, which indicates stationary object photography using flash.

In the above-described step S204 illustrated in Fig. 5, such display can be executed on the display unit 321 by the flash microcomputer 310.

According to the second exemplary embodiment, when the captured image is a stationary object, since the shutter speed (TV) can be extended, limitation is not added to a distance similar to continuous turning-on light. Thus, maximum display can be made as a flash reach distance.

An example of stationary object and moving object determination has been described. However, when this determination can be executed, the present invention is not limited to this method. Further, when the captured image is determined to be a stationary object, an energization current may be reduced in order to prevent a light source such as the white LED 307 from deteriorating since a turning-on time is extended.

As described above, the first and the second exemplary embodiments of the present invention relate to the flash device 300 with the white LED 307 as a light source to be used in a focal-plane shutter camera body 100 with the lens unit 200. The flash device 300 in the first and the second exemplary embodiments is configured as follows to prevent occurrence of underexposure during photographing.

A reach distance of the flash device 300 is calculated using photographing information, which is communicated from the camera body 100, and the calculated reach distance is displayed on the display unit 321. The photographing information contains data concerning focal length information on the lens unit 200 and a vibration allowable speed (vibration limiting speed). Further, the photographing information contains information concerning the presence or absence of the image stabilization control device 207. The display data on the reach distance can be changed depending on the presence or absence of operation of the image stabilization control device 207. It is not necessary to contain all of the above-described pieces of information exemplified as photographing information. At least one of the above-described pieces of information may be contained.

Further, when focal length information and a vibration allowable speed (vibration limiting speed) are absent in the photographing information, or a communication function is absent, a maximum distance is calculated using predetermined information, and the calculated maximum distance is displayed on the display unit 321. The predetermined information includes a flash synchronization speed, a focal length of a standard lens (e.g., 50 mm), and others.

Furthermore, the photographing information may contain determination information indicating whether an image that is captured in a live view mode is a stationary object or a moving object. When the captured image is a stationary object, maximum distance display in specifications is executed by bar display or distance display of the absolute value. Herein, the maximum distance display is not limited to bar display or distance display of the absolute value but can be displayed with a specific index.

As described above, since setting of a vibration allowable speed (vibration limiting speed) allows a reach distance of flash light from the flash device 300 to be recognized before photographing, occurrence of underexposure during photographing can be prevented. Further, since a flash reach distance is changed depending on the presence or absence of operation of the image stabilization control device 207, an photographing region can be expanded by operation of an image stabilization function.

In the first and the second exemplary embodiments of the present invention, the flash device 300 calculates a flash reach distance. However, the camera body 100 can calculate a flash reach distance using information associated with flash photography received from the flash device 300.

Further, display of the calculated flash reach distance is not limited to the display unit of the flash device 300 but it may be displayed on the display unit of the camera body 100.

Furthermore, the lens unit 200 may be integrated with the camera body 100. In such a case, control of the lens unit 200 may be executed by the camera microcomputer 101 instead of the lens microcomputer 201.

Still furthermore, the flash device 300 may be integrated with the camera body 100. In such a case, control of the flash device 300 may be executed by the camera microcomputer 101 instead of the flash microcomputer 310.

Further, a light source of the flash device 300 is not limited to a white LED. It may be a light source that is arranged for emitting light at a constant amount of light emission and continuously emitting light during a period in which the same voltage is supplied.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

**Claims**

1. A flash device (300) connectable to an imaging apparatus (100), the flash device comprising:

   light emission means (307) arranged for continuous light emission;
   calculation means (310) configured to calculate a reach distance of flash light from the light emission means based on an exposure time for flash photographing set in the imaging apparatus; and
   display control means (310) configured to cause information indicating the reach distance calculated by the calculation means to be displayed.

2. The flash device according to claim 1, further comprising:

   reception means (310) configured to receive photographing information from the imaging apparatus; and
   determination means (310) configured to determine the exposure time for flash photographing based on the photographing information received by the reception means.

3. A flash device according to claim 2, wherein the photographing information includes information concerning a vibration allowable speed of the imaging apparatus, and
   wherein the determination means determines the exposure time for flash photographing based on the information concerning the vibration allowable speed.

4. A flash device according to claim 3, wherein the information concerning the vibration allowable speed includes focal length information on the imaging apparatus.

5. A flash device according to claim 4, wherein the photographing information includes information concerning a flash synchronization speed of the imaging apparatus, and
   wherein the determination means determines the exposure time for flash photographing based on the information concerning the flash synchronization speed and the focal length information.

6. A flash device according to claim 2, wherein the photographing information includes information concerning image stabilization control of the imaging apparatus, and
   wherein the calculation means calculates the reach distance of flash light based on whether the imaging apparatus executes image stabilization control.

7. A flash device according to claim 2, wherein the photographing information includes determination information indicating whether an object is a moving object or a stationary object, and
   wherein, when the object is a stationary object, the display control means causes information indicating that the reach distance is the largest among the information indicating the reach distance to be displayed.

8. A flash device according to claim 2, wherein the photographing information includes determination information indicating whether an object is a moving object or a stationary object, and
   wherein, when the object is a stationary object, the display control means causes an index indicating that the object is a stationary object to be displayed.

9. A flash device according to claim 1, wherein the light emission means includes a light-emitting diode.

10. A flash device according to claim 1, wherein the display control means causes the information indicating the reach distance to be displayed on at least one of display means of the flash device and display means of the imaging apparatus.

11. An imaging apparatus (100) configured to execute flash photographing using light emission means (307) arranged for continuous light emission, the imaging apparatus comprising:

   setting means (101) configured to set an exposure time;
   calculation means (101) configured to calculate a reach distance of flash light from the light emission means based on the exposure time for flash photographing; and
   display control means (101) configured to cause information indicating the reach distance calculated by the calculation means to be displayed.

12. A camera system including a flash device (300) with light emission means (307) arranged for continuous light emission and an imaging apparatus (100) connectable to the flash device, the camera system comprising:

   setting means (310, 101) configured to set an exposure time;
   calculation means (310, 101) configured to calculate a reach distance of flash light from the light emission means based on the exposure time for flash photographing; and
   display control means (310, 101) configured to cause information indicating the reach distance calculated by the calculation means to be displayed.

13. A method for controlling a flash device (300) with light emission means (307) arranged for continuous light emission, the flash device being connectable to an imaging apparatus (100), the method comprising:

   calculating a reach distance of flash light from the light emission means based on an exposure time for flash photographing set in the imaging apparatus; and
   causing information indicating the calculated reach distance to be displayed.

**Patentansprüche**

1. Mit einer Bildgebungsvorrichtung (100) verbindbare Blitzvorrichtung (300), diese umfassend:

   eine Lichtemissionseinrichtung (307), ausgebildet zur kontinuierlichen Lichtemission;
   eine Berechnungseinrichtung (310), konfiguriert zum Berechnen einer Reichweite eines Blitzlichts von der Lichtemissionseinrichtung basierend auf einer in der Bildgebungsvorrichtung eingestellten Belichtungszeit für eine Blitzaufnahme; und
   eine Anzeigesteuerungseinrichtung (310), konfiguriert zum Veranlassen, dass die die durch die Berechnungseinrichtung berechnete Reichweite angebende Information angezeigt wird.

2. Blitzvorrichtung nach Anspruch 1, ferner umfassend:

   eine Empfangseinrichtung (310), konfiguriert zum Empfangen von Aufnahmeinformation von der Bildgebungsvorrichtung; und
   eine Bestimmungseinrichtung (310), konfiguriert zum Bestimmen der Belichtungszeit für eine Blitzaufnahme basierend auf der durch die Empfangseinrichtung empfangenen Aufnahmeinformation.

3. Blitzvorrichtung nach Anspruch 2, wobei die Aufnahmeinformation Information bezüglich einer hinsichtlich Vibration zulässigen Geschwindigkeit der Bildgebungsvorrichtung enthält, und wobei die Bestimmungseinrichtung die Belichtungszeit für eine Blitzaufnahme bestimmt basierend auf der Information bezüglich der hinsichtlich Vibration zulässigen Geschwindigkeit.

4. Blitzvorrichtung nach Anspruch 3, wobei die Information bezüglich der hinsichtlich Vibration zulässigen Geschwindigkeit Brennweiteninformation über die Bildgebungsvorrichtung enthält.

**5.** Blitzvorrichtung nach Anspruch 4, wobei die Aufnahmeinformation Information bezüglich einer Blitzsynchronisationsgeschwindigkeit der Bildgebungsvorrichtung enthält, und
wobei die Bestimmungseinrichtung die Belichtungszeit für eine Blitzaufnahme basierend auf der Information bezüglich der Blitzsynchronisationsgeschwindigkeit und der Brennweiteninformation bestimmt.

**6.** Blitzvorrichtung nach Anspruch 2, wobei die Aufnahmeinformation Information bezüglich Bildstabilisationssteuerung der Bildgebungsvorrichtung enthält, und
wobei die Berechnungseinrichtung die Reichweite des Blitzlichts berechnet basierend darauf, ob die Bildgebungsvorrichtung eine Bildstabilisationssteuerung ausführt.

**7.** Blitzvorrichtung nach Anspruch 2, wobei die Aufnahmeinformation eine Bestimmungsinformation enthält, die angibt, ob ein Objekt ein sich bewegendes oder ein stationäres Objekt ist, und
wobei, wenn das Objekt ein stationäres Objekt ist, die Anzeigesteuerungseinrichtung veranlasst, dass die Information, die angibt, dass die Reichweite die größte unter den die Reichweite angebenden Informationen ist, angezeigt wird.

**8.** Blitzvorrichtung nach Anspruch 2, wobei die Aufnahmeinformation Bestimmungsinformation enthält, die angibt, ob ein Objekt ein sich bewegendes oder ein stationäres Objekt ist, und
wobei, wenn das Objekt ein stationäres Objekt ist, die Anzeigesteuerungseinrichtung veranlasst, dass ein Index, der angibt, dass das Objekt ein stationäres Objekt ist, angezeigt wird.

**9.** Blitzvorrichtung nach Anspruch 1, wobei die Lichtemissionseinrichtung eine Lichtemissionsdiode enthält.

**10.** Blitzvorrichtung nach Anspruch 1, wobei die Anzeigesteuerungseinrichtung veranlasst, dass die Information, die die Reichweite angibt, auf einer Anzeigeeinrichtung der Blitzvorrichtung und/oder einer Anzeigeeinrichtung der Bildgebungsvorrichtung angezeigt wird.

**11.** Bildgebungsvorrichtung (100), konfiguriert zum Ausführen einer Blitzaufnahme unter Verwendung einer Lichtemissionseinrichtung (307), ausgebildet zur kontinuierlichen Lichtemission, die Bildgebungsvorrichtung umfassend:

eine Einstelleinrichtung (101), konfiguriert zum Einstellen einer Belichtungszeit;
eine Berechnungseinrichtung (101), konfiguriert zum Berechnen einer Reichweite eines Blitzlichts von der Lichtemissionseinrichtung basierend auf der Belichtungszeit für eine Blitzaufnahme; und
eine Anzeigesteuerungseinrichtung (101), konfiguriert zum Veranlassen, dass eine Information, die die durch die Berechnungseinrichtung berechnete Reichweite angibt, angezeigt wird.

**12.** Kamerasystem mit einer Blitzvorrichtung (300) einschließlich einer zur kontinuierlichen Lichtemission ausgebildeten Lichtemissionseinrichtung (307) und einem mit der Blitzvorrichtung verbindbaren Bildgebungsvorrichtung (100), das Kamerasystem umfassend:

eine Einstelleinrichtung (310, 101), konfiguriert zum Einstellen einer Belichtungszeit;
eine Berechnungseinrichtung (310, 101), konfiguriert zum Berechnen einer Reichweite eines Blitzlichts von der Lichtemissionseinrichtung basierend auf der Belichtungszeit für eine Blitzaufnahme; und
eine Anzeigesteuerungseinrichtung (310, 101), konfiguriert zum Veranlassen, dass eine Information, die die durch die Berechnungseinrichtung berechnete Reichweite angibt, angezeigt wird.

**13.** Verfahren zum Steuern einer Blitzvorrichtung (300) mit einer zur kontinuierlichen Lichtemission ausgebildeten Lichtemissionseinrichtung (307), wobei die Blitzvorrichtung verbindbar mit einer Bildgebungsvorrichtung (100) ist und das Verfahren umfasst:

Berechnen einer Reichweite eines Blitzlichts von der Lichtemissionseinrichtung basierend auf einer in der Bildgebungsvorrichtung eingestellten Belichtungszeit für eine Blitzaufnahme; und
Veranlassen, dass eine die berechnete Reichweite angebende Information angezeigt wird.

**Revendications**

**1.** Dispositif de flash (300) pouvant être connecté à un appareil de formation d'image (100), le dispositif de flash comprenant :

un moyen d'émission lumineuse (307) conçu pour émettre en continu de la lumière ;
un moyen de calcul (310) configuré pour calculer une portée de la lumière du flash depuis le moyen d'émission lumineuse sur la base d'un temps d'exposition d'une photographie au flash réglé dans l'appareil de formation d'image ; et
un moyen de commande d'affichage (310) configuré pour provoquer l'affichage d'informations indiquant la portée calculée par le moyen de calcul.

2. Dispositif de flash selon la revendication 1, comprenant en outre :

un moyen de réception (310) configuré pour recevoir des informations de photographie en provenance de l'appareil de formation d'image ; et
un moyen de détermination (310) configuré pour déterminer le temps d'exposition pour la photographie au flash sur la base des informations de photographie reçues par le moyen de réception.

3. Dispositif de flash selon la revendication 2, dans lequel les informations de photographie comprennent des informations concernant une vitesse admissible en fonction des vibrations de l'appareil de formation d'image, et
dans lequel le moyen de détermination (310) détermine le temps d'exposition pour la photographie au flash sur la base des informations concernant la vitesse admissible en fonction des vibrations.

4. Dispositif de flash selon la revendication 3, dans lequel les informations concernant la vitesse admissible en fonction des vibrations comprennent des informations de longueur focale concernant l'appareil de formation d'image.

5. Dispositif de flash selon la revendication 4, dans lequel les informations de photographie comprennent des informations concernant une vitesse de synchronisation du flash de l'appareil de formation d'image, et
dans lequel le moyen de détermination détermine le temps d'exposition pour la photographie au flash sur la base des informations concernant la vitesse de synchronisation du flash et des informations de longueur focale.

6. Dispositif de flash selon la revendication 2, dans lequel les informations de photographie comprennent des informations concernant une commande de stabilisation d'image de l'appareil de formation d'image, et
dans lequel le moyen de calcul calcule la portée de la lumière du flash sur la base du fait que l'appareil de formation d'image exécute ou non une commande de stabilisation d'image.

7. Dispositif de flash selon la revendication 2, dans lequel les informations de photographie comprennent des informations de détermination indiquant si un objet est un objet en mouvement ou un objet stationnaire, et
dans lequel, lorsque l'objet est un objet stationnaire, le moyen de commande d'affichage provoque l'affichage d'informations indiquant que la portée est la plus grande parmi les informations indiquant la portée.

8. Dispositif de flash selon la revendication 2, dans lequel les informations de photographie comprennent des informations de détermination indiquant si un objet est un objet en mouvement ou un objet stationnaire, et
dans lequel, lorsque l'objet est un objet stationnaire, le moyen de commande d'affichage provoque l'affichage d'un indice indiquant que l'objet est un objet stationnaire.

9. Dispositif de flash selon la revendication 2, dans lequel le moyen d'émission lumineuse comprend une diode électroluminescente.

10. Dispositif de flash selon la revendication 1, dans lequel le moyen de commande d'affichage provoque l'affichage d'informations indiquant la portée sur au moins un moyen d'affichage du dispositif de flash et un moyen d'affichage de l'appareil de formation d'image.

11. Appareil de formation d'image (100) configuré pour exécuter une photographie au flash en utilisant le moyen d'émission lumineuse (307) conçu pour émettre en continu de la lumière, l'appareil de formation d'image comprenant :

un moyen de réglage (101) configuré pour régler un temps d'exposition ;
un moyen de calcul (101) configuré pour calculer une portée de la lumière du flash depuis le moyen d'émission lumineuse sur la base du temps d'exposition destiné à la photographie au flash ; et
un moyen de commande d'affichage (101) configuré pour provoquer l'affichage d'informations indiquant la portée calculée par le moyen de calcul.

12. Système d'appareil photo comportant un dispositif de flash (300) ayant un moyen d'émission lumineuse (307) conçu pour émettre en continu de la lumière et un appareil de formation d'image (100) pouvant être connecté au dispositif de flash, le système d'appareil photo comprenant :

un moyen de réglage (310, 101) configuré pour régler un temps d'exposition ;
un moyen de calcul (310, 101) configuré pour calculer une portée de la lumière du flash depuis le moyen d'émission lumineuse sur la base du temps d'exposition destiné à la photographie au flash ; et
un moyen de commande d'affichage (310, 101) configuré pour provoquer l'affichage d'informations indiquant la portée calculée par le moyen de calcul.

13. Procédé de commande d'un dispositif de flash (300) comportant un moyen d'émission lumineuse (307) conçu pour émettre en continu de la lumière, le dispositif de flash pouvant être connecté à un appareil de formation d'image, le procédé consistant à :

calculer une portée d'une lumière de flash depuis le moyen d'émission lumineuse sur la base d'un temps d'exposition destiné à la photographie au flash réglé dans l'appareil de formation d'image ; et
provoquer l'affichage d'informations indiquant la portée calculée.

# FIG.1

# FIG.2A

# FIG.2B

# FIG.2C

# FIG.3

START

S101 IS SW1 TURNED ON?
— NO (loop back)
— YES

S102 EXECUTE INITIAL RESET

S103 AF MODE?
— YES
  - S104 DETECT FOCUS
  - S105 DRIVE LENS
— NO

S106 EXECUTE LIGHT METERING

S107 CALCULATE EXPOSURE

S108 RECEIVE LENS INFORMATION

S109 COMMUNICATE FLASH DATA

S110 IS SW2 TURNED ON?
— NO (loop back)
— YES

S111 EXECUTE LIGHT METERING OF EXTERNAL LIGHT LUMINANCE

S112 EXECUTE PRELIMINARY LIGHT EMISSION

S113 RECEIVE REFLECTED LIGHT

S114 MOVE MIRROR UP

S115 EXTRACT PRELIMINARY LIGHT EMISSION COMPONENT

S116 OBTAIN AMOUNT OF PRELIMINARY LIGHT EMISSION

S117 CALCULATE AMOUNT OF MAIN LIGHT EMISSION

S118 EXECUTE CORRECTION

S119 EXECUTE COMMUNICATION

S120 EXECUTE SHUTTER/ DIAPHRAGM CONTROL

S121 EXECUTE MAIN LIGHT EMISSION

S122 MOVE MIRROR DOWN

S123 EXECUTE DEVELOPMENT PROCESSING

S124 EXECUTE RECORDING

END

21

# FIG.4

| SENSITIVITY (GAIN) | CORRECTION AMOUNT (EV) | LIGHT SOURCE ELECTRIC CURRENT (mA) | CORRECTION AMOUNT (EV) | ZOOM FOCAL LENGTH | CORRECTION AMOUNT (EV) | SHUTTER SPEED | CORRECTION AMOUNT (EV) | IMAGE STABILIZATION NUMBER-OF-STEPS IS_EV | CORRECTION AMOUNT (EV) |
|---|---|---|---|---|---|---|---|---|---|
| 25 | -2 | 1000 | +1.3 | 24mm | -2.1 | 1/250 | -2.9 | NO IMAGE STABILIZATION | 0 |
| 50 | -1 | 800 | +1.0 | 28mm | -1.9 | 1/200 | -2.3 | 1 | +1 |
| 100 | 0 | 400 | 0 | 35mm | -1.4 | 1/120 | -1.21 | 2 | +2 |
| 200 | +1 | 200 | -1 | 50mm | -0.9 | 1/60 | 0 | 3 | +3 |
| 400 | +2 | 100 | -2 | 70mm | -0.5 | 1/50 | +0.3 | 4 | +4 |
| 800 | +3 | 50 | -3 | 105mm | 0 | 1/30 | +1.1 | | |
| 1600 | +4 | 30 | -3.7 | | | 1/15 | +2.2 | | |
| 2400 | +5 | 15 | -4.7 | | | 1/8 | +3.1 | | |
| 3200 | +6 | 10 | -5.3 | | | 1/4 | +4.1 | | |

EP 2 133 741 B1

# FIG.5

START

↓

RECEIVE VARIOUS
ITEMS OF INFORMATION — S201

↓

TRANSMIT VARIOUS
ITEMS OF INFORMATION — S202

↓

CALCULATE
REACH DISTANCE — S203

↓

DISPLAY INFORMATION — S204

↓

TRANSMIT
SHUTTER SPEED — S205

↓

DRIVE ZOOM — S206

↓

S207

NO ← A PREDETERMINED
POSITION REACHED?

↓ YES

RETURN

# FIG.6

START

CALCULATE REFERENCE
REACH DISTANCE —S301

IS FOCAL
LENGTH INFORMATION
PRESENT? —S302

NO

YES —S303

tx < 1/f?

NO —S305

YES —S304

TV = tx

TV = 1/f

f ← 50mm —S306

TV = 1/60 —S307

IS IMAGE
STABILIZATION CONTROL
SELECTED? —S308

NO

YES

CONFIRM IS_EV —S309

DETERMINE
REACH DISTANCE —S310

RETURN

# FIG.7A

FLASH LIGHT
EMISSION
WAVEFORM

FIRST
CURTAIN

SECOND
CURTAIN

SECOND
CURTAIN

t0

t_sync

tx

t_sh

# FIG.7B

LED LIGHT
EMISSION
WAVEFORM

t1

t2

FIRST
CURTAIN

SECOND
CURTAIN

SECOND
CURTAIN

t0

t_sync

tx

t_sh

# FIG.8

| DISTANCE (m) / CORRECTION AMOUNT (EV) | 0.5 | 0.7 | 1 | 1.4 | 2 | 2.8 | 4 | 5.6 | 8 | 11 | 16 | 22 |
|---|---|---|---|---|---|---|---|---|---|---|---|---|
| -6 | | | | | | | 0.5 | 0.7 | 1.0 | 1.4 | 2 | 2.8 |
| -5.5 | | | | | | | 0.6 | 0.8 | 1.2 | 1.7 | 2.4 | 3.4 |
| -5 | | | | | | 0.5 | 0.7 | 1.0 | 1.4 | 2 | 2.8 | 4 |
| -4.5 | | | | | | 0.6 | 0.8 | 1.2 | 1.7 | 2.4 | 3.4 | 4.8 |
| -4 | | | | | 0.5 | 0.7 | 1.0 | 1.4 | 2 | 2.8 | 4 | 5.6 |
| -3.5 | | | | | 0.6 | 0.8 | 1.2 | 1.7 | 2.4 | 3.4 | 4.8 | 6.7 |
| -3 | | | | 0.5 | 0.7 | 1.0 | 1.4 | 2 | 2.8 | 4 | 5.6 | 8 |
| -2.5 | | | | 0.6 | 0.8 | 1.2 | 1.7 | 2.4 | 3.4 | 4.8 | 6.7 | 9.5 |
| -2 | | | 0.5 | 0.7 | 1.0 | 1.4 | 2 | 2.8 | 4 | 5.6 | 8 | 11 |
| -1.5 | | | 0.6 | 0.8 | 1.2 | 1.7 | 2.4 | 3.4 | 4.8 | 6.7 | 9.5 | 13 |
| -1 | | 0.5 | 0.7 | 1.0 | 1.4 | 2 | 2.8 | 4 | 5.6 | 8 | 11 | 16 |
| -0.5 | | 0.6 | 0.8 | 1.2 | 1.7 | 2.4 | 3.4 | 4.8 | 6.7 | 9.5 | 13 | 19 |
| 0 | 0.5 | 0.7 | 1.0 | 1.4 | 2 | 2.8 | 4 | 5.6 | 8 | 11 | 16 | 22 |
| +0.5 | 0.6 | 0.8 | 1.2 | 1.7 | 2.4 | 3.4 | 4.8 | 6.7 | 9.5 | 13 | 19 | 27 |
| +1 | 0.7 | 1.0 | 1.4 | 2 | 2.8 | 4 | 5.6 | 8 | 11 | 16 | 22 | 32 |
| +1.5 | 0.8 | 1.2 | 1.7 | 2.4 | 3.4 | 4.8 | 6.7 | 9.5 | 13 | 19 | 27 | |
| +2 | 1.0 | 1.4 | 2 | 2.8 | 4 | 5.6 | 8 | 11 | 16 | 22 | 32 | |
| +2.5 | 1.2 | 1.7 | 2.4 | 3.4 | 4.8 | 6.7 | 9.5 | 13 | 19 | 27 | | |
| +3 | 1.4 | 2 | 2.8 | 4 | 5.6 | 8 | 11 | 16 | 22 | 32 | | |
| +3.5 | 1.7 | 2.4 | 3.4 | 4.8 | 6.7 | 9.5 | 13 | 19 | 27 | | | |
| +4 | 2 | 2.8 | 4 | 5.6 | 8 | 11 | 16 | 22 | 32 | | | |
| +4.5 | 2.4 | 3.4 | 4.8 | 6.7 | 9.5 | 13 | 19 | 27 | | | | |
| +5 | 2.8 | 4 | 5.6 | 8 | 11 | 16 | 22 | 32 | | | | |

EP 2 133 741 B1

## FIG.9A

Zoom 50mm   FNo. 5.6
ISO 400   1/50s
ON
0.7m – – 27m

CORRECTION AMOUNT (a)

Zoom 50mm   FNo. 5.6
ISO 400   1/50s
ON
0.5 0.7 1 1.5 2 3 4 6 9 13 18

## FIG.9B

Zoom 50mm   FNo. 5.6
ISO 400   1/50s
0.7m – – 13m

CORRECTION AMOUNT (b)

Zoom 50mm   FNo. 5.6
ISO 400   1/50s
0.5 0.7 1 1.5 2 3 4 6 9 13 18

## FIG.9C

Zoom 50mm   FNo. 5.6
ISO 400   1/60s
0.7m – – 11m

CORRECTION AMOUNT (c)

Zoom 50mm   FNo. 5.6
ISO 400   1/60s
0.5 0.7 1 1.5 2 3 4 6 9 13 18

# FIG.10

# FIG.11

START

IS SW1 TURNED ON? — S401

NO

YES — S402

MOVE MIRROR UP

— S403

OPEN SHUTTER

ADJUST FOCUS — S404

EXECUTE IMAGING — S405

EXECUTE IMAGE PROCESSING — S406

EXECUTE MONITOR DISPLAY — S407

EXECUTE LIGHT METERING — S408

CALCULATE EXPOSURE — S409

EXECUTE DIAPHRAGM CONTROL — S410

CAPTURE IMAGE — S411

COMPARE CAPTURED IMAGE WITH PREVIOUS IMAGE — S412

STATIONARY OBJECT? — S413

NO

YES — S414

SET STATIONARY OBJECT FLAG

SET MOVING OBJECT FLAG — S415

RECEIVE LENS INFORMATION — S416

COMMUNICATE FLASH DATA — S417

RETURN

# FIG.12

START

$S501$

MOVING OBJECT FLAG? —— NO

YES

CALCULATE REFERENCE REACH DISTANCE — $S502$

$S503$

IS FOCAL LENGTH INFORMATION PRESENT? —— NO

YES $S504$

NO ←—— tx < 1/f?

$S506$

YES $S507$

f ← 50mm

$S505$ YES $S508$

TV = tx

TV = 1/f

TV = 1/60

$S509$

IS IMAGE STABILIZATION CONTROL SELECTED? —— NO

YES

CONFIRM IS_EV — $S510$

DETERMINE REACH DISTANCE — $S511$

RETURN

# FIG.13A

Zoom  50mm    FNo.  5.6
ISO   400        1/50s

◁ □ □ ▮ ▮ ▮ ▮ ▮ ▮ ▮ ▮ ▶
0.5 0.7 1 1.5 2 3 4 6 9 13 18

# FIG.13B

Zoom  50mm       FNo.  5.6
ISO   400           1/50s

0.7m   − −   30m

# FIG.13C

Zoom  50mm       FNo.  5.6
ISO   400           1/50s

0.7m   − −

401

EP 2 133 741 B1

**EP 2 133 741 B1**

**Patent documents cited in the description**

- JP 6021030 A

- US 2005265014 A